Europäisches Patentamt

European Patent Office

Office européen des brevets

(11) Publication number: **0 059 089**
**B1**

## EUROPEAN PATENT SPECIFICATION

(45) Date of publication of patent specification: **15.06.88**

(51) Int. Cl.⁴: **G 05 F 1/62, H 02 J 9/06**

(21) Application number: **82300859.4**

(22) Date of filing: **19.02.82**

(54) Power supply apparatus.

(30) Priority: **20.02.81 US 236402**

(43) Date of publication of application:
**01.09.82 Bulletin 82/35**

(45) Publication of the grant of the patent:
**15.06.88 Bulletin 88/24**

(84) Designated Contracting States:
**DE FR GB IT**

(56) References cited:
**DE-A-2 855 466**
**US-A-3 808 452**
**US-A-3 956 638**
**US-A-4 074 182**

(73) Proprietor: **THE BABCOCK & WILCOX
COMPANY
1010 Common Street P.O. Box 60035
New Orleans Louisiana 70160 (US)**

(72) Inventor: **Mohat, William David
115 East 208 Street
Euclid Ohio 44123 (US)**

(74) Representative: **Cotter, Ivan John et al
D. YOUNG & CO. 10 Staple Inn
London WC1V 7RD (GB)**

Courier Press, Leamington Spa, England.

## Description

The present invention relates generally to power supply apparatus.

Critical electronic installations typically require redundant power supply arrangements in order to ensure continuation of power in the event of a single power supply failure. Conventional redundant power supply arrangements, while adequate for some power supply arrangements, typically cannot be used effectively with large, multiple output switching-mode power supplies for a variety of reasons. For example, the conventional "OR" circuit arrangement, with remote sensing, for power supplies requires that both power supplies be maintained at exactly the same output voltage level. If one of the power supplies senses a load voltage higher than its own preset voltage level, it automatically responds by reducing its output voltage. This condition eventually results in the output voltage of this power supply collapsing. In contrast, if the conventional "OR" circuit arrangement utilizes local sensing, the aforementioned condition does not result in the collapse of the output voltage of the power supply because each power supply maintains its output voltage behind its isolation diode. However, with this circuit arrangement, load current changes cause line and diode voltage drops that cannot be compensated for by the power supplies, i.e., this circuit arrangement has poor load regulation. If a master-slave power supply arrangement with load sharing it utilised, some of the aforementioned problems are overcome. However, this arrangement has an inherent problem, i.e., if a "slave" power supply fails, the "master" power supply can take over, but if the "master" should fail, the "slave" also is forced to fail. This disadvantage is the result of this power supply arrangement not being totally redundant.

Because of the foregoing, it has now become desirable to develop a power supply arrangement that utilises load sharing between the supplies and is totally redundant so that if either power supply fails, the other power supply will automatically furnish the total power required by the load.

German Patent Application Publication No DE—A—2 855 466 discloses a power supply apparatus for supplying electrical power to a common load, the apparatus comprising a first power supply means and a second power supply means each electrically connected to the common load, detecting means operative to monitor voltages indicative of the outputs of the respective power supply means and to produce therefrom a signal proportional to any difference between the outputs, and signal responsive means responsive to the signal produced by the detecting means to cause the output voltage of only one or the other of the first and second power supply means to change in such a sense that the first and second power supply means are operative to approximately equally supply electrical power to the common load.

The apparatus disclosed in DE—A—2 855 466 appears to provide load sharing and to be totally redundant so that, if either power supply means fails, the other power supply will automatically furnish the total power required by the load. However, for the reason explained below, it is believed that the apparatus proposed in DE—A—2 855 466, if embodied in practice, will not generally (or at least only with great difficulty) provide proper load sharing. In DE—A—2 855 466, a respective isolating half-wave rectifier (diode) is positioned in a respective lead connecting each power supply means to a common bus extending to the common load. The detecting means is connected to the leads, upstream of the half-wave rectifiers, so as to monitor the output voltages of the respective power supply means and to produce therefrom a signal proportional to any difference between these output voltages. In theory, this should enable satisfactory load sharing. In practice, however, it is believed that satisfactory load sharing cannot be achieved, at least without great difficulty, since measuring the power supply means output voltages on the upstream or power supply means sides of the half-wave rectifiers (diodes) does not take into account diode voltage drops (due to the operating characteristics of the individual diodes and temperature, ageing and load effects) or line voltage drops (which can be significant due to the large line currents). Thus, it is substantially impossible accurately to match the respective voltage drops between the respective power supply means and the common bus har and, even if matching could be obtained at a particular point in time, it would not be maintained indefinitely. Matching of the voltage drops is critical to be successful operation of the apparatus of DE—A—2 855 466. Even a tiny difference could prevent the power supply means from sharing the load equally, and, in fact, could cause one power supply to carry the entire load all the time. Not only does this frustrate the aim of equal load sharing, but if the power supply carrying the entire load fails, the other supply (that carrying none of the load when the failure occurs) is unable to respons quickly without introducing destructive voltage spikes and drops.

The present invention is characterised by the fact that the detecting means, instead of locally monitoring the output voltages of the power supply means, monitors voltages proportional to the respective output currents of the respective power supply means, whereby the signal is proportional to the difference between the respective output currents of the resepctive power supply means. It therefore cirumvents the problem of unequal voltage drops in that, in effect, it monitors the respective contributions of the respective power supply means directly at the load.

According to a preferred feature of the invention, each power supply means is electrically connected to the common load by a respective bus and the detecting means is operative to monitor voltages proportional to the respective currents flowing through the respective busses. In this way, the signals necessary for the operation of the detecting means can be obtained in a simple manner.

A power supply apparatus constituting a preferred embodiment of the present invention and described hereinbelow provides good load sharing and is totally redundant to ensure the availability of power to the load. More specifically, the preferred power supply apparatus utilises an error amplifier and two specially designed drive amplifiers arranged in such a way so as to make the arrangement "masterless", i.e., if either power supply should fail, the other power supply automatically furnishes the total power requirements of the load. The error amplifier detects any diffrence in the output currents of the power supplies and, when a difference occurs, causes the power supply having the lower output voltage to increase its output voltage a commensurate amount until the difference is eliminated. In effect, either power supply can be the "master" supply while the other supply acts as the "slave". Whichever power supply has the higher output voltage at any given time becomes the "master", while the other supply becomes the "slave". Because of this, any output drive voltage drift is automatically compensated for, and if the "master" fails, the "slave", which now has the higher output voltage, immediately becomes the new master. The power supplies share the load requirements equally.

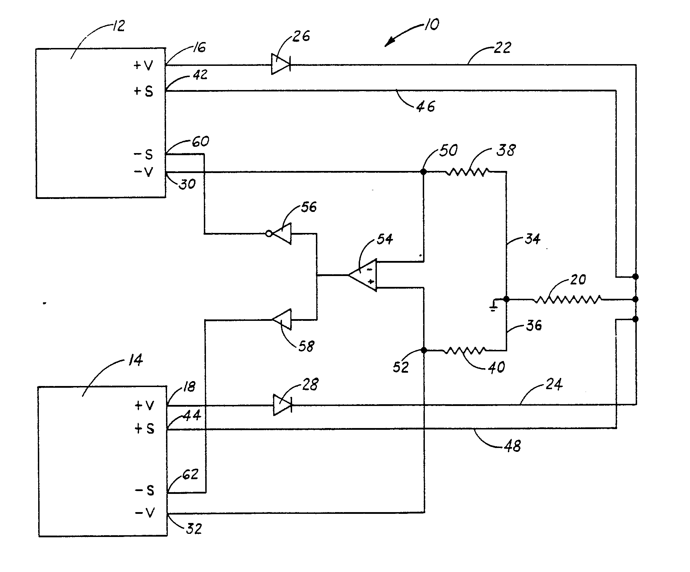

The invention will now be further described, by way of illustrative and non-limiting example, with reference to the accompanying drawing, the sole figure of which is an electrical schematic of a power supply apparatus embodying the invention.

The drawing illustrates an electrical circuit 10 used by apparatus embodying the present invention. The circuit 10 comprises two similar power supplies 12, 14 whose respective positive voltage terminals 16, 18 are connected to a common load 20 via voltage busses 22, 24 and isolation diodes 26, 28. The common load 20 is, in turn, connected to negative voltage terminals 30, 32 of the respective power supplies 12, 14 via return busses 34, 36. The total resistance of the bus 34 is shown as a resistance 38 and the total resistance of the bus 36 is shown as a resistance 40. In this circuit arrangement, each of the power supplies 12, 14 can supply full load power to the common load 20 and can provide uninterrupted service thereto even if one of the power supplies becomes totally inoperative. The power supplies 12, 14 are of the "Switching Mode" type and are of similar construction and size. As such, they should be purchased or designed for a particular application. Inasmuch as the apparatus disclosed herein is directed in particular to the control and regulation of the power supplies 12, 14, and not to the construction of same, no further description of these supplies will be made other than they should be equipped with both positive and negative "sense" (S) feedback or control terminals.

The positive "sense" (S) terminals 42, 44 of the respective power supplies 12, 14 are connected to an input of the common load 20 via connecting leads 46, 48, respectively. The output of the common load 20 is, in turn, connected via the return busses 34, 36 and at points 50, 52 to the inputs to an integrating differential error amplifier 54. The output of the integrating differential amplifier 54 is, in turn, connected to inputs to amplifiers 56, 58 whose ouptuts are connected to the negative sense (S) terminals 60, 62 of the power supplies 12, 24, respectively.

The integrating differential amplifier 54 is of standard construction and has a gain of one (unity). The amplifier 54 is connected such that if the point 50 is more negative than the point 52, the output of the amplifier 54 is positive, but if the point 50 is more positive than the point 52, the output of the amplifier 54 is negative. The amplifier 56 is an inverting amplifier, i.e., when its input is negative, its output is positive. In contrast, the amplifier 58 is a non-inverting amplifier, i.e., when its input is positive, its output is also positive. Both the amplifiers 56 and 58 have a gain of unit. In addition, each of the amplifiers 56, 58 has a unique operating feature in that their outputs can never be negative and their outputs are limited to a specific percentage (generally 5%) of the rated output voltage of the power supplies 12, 14. By so limiting the outputs of the amplifiers 56, 58, the power supplies 12, 14 are protected from being driven to a level which would produce damage thereto in the event of a broken lead or malfunctioning component.

Since only a negligible current flows through the connecting leads 46, 48 to the load 20, there is only a negligible voltage drop across these leads. Thus, the voltage applied to the positive sense (S) terminals is the same as the voltage at the load 20. This is not the case for the voltage busses 22, 24 and the return busses 34, 36. The current flow through these busses is typically much greater than the current flow through the sense leads 46, 48. In addition, the resistance of the respective busses will not be exactly the same nor will be the resistance of the isolation diodes 26, 28. Thus, the two parallel load circuits, which are apparently identical, typically do not equally share the load. In addition, the normal tendency of the output voltage of power supplies to "drift" slightly from their set point also causes an unequal sharing of the common load 20 by the power supplies 12, 14 unless some type of correction is made in their output voltages.

In operation, the output voltage of the power supplies 12 and 14 are adjusted as closely as possible to the voltage required to power the common load 20. Even though these power supplies 12, 14 are so adjusted, in all probability the output voltage of one power supply will be slightly higher than that of the other power supply. Assuming this is the case and that the output voltage of the power supply 12 is slightly higher than that of power supply 14, then the current flow through the voltage bus 34 to the common load 20 will be slightly greater than the current flow through the voltage bus 36 to the load 20. This causes the point 50 to become more negative than the point 52 because of the greater voltage drop across the bus resistance 38 than across the bus resistance 40. Under these conditions, the output of the integrating differential amplifier 54 becomes positive. In addition, inasmuch as the integrating differential amplifier 54 has a gain of unit, the percentage gain of this amplifier will become the same as the difference in voltage between the points 50 and 52 expressed as a percentage of the desired output voltage and the power supplies 12, 14. Thus, if the difference in voltage between the points 50 and 52, expressed as a percentage of the desired supply voltage, is 1%, then the output of the differential amplifier 54 will also become 1%.

The inverting amplifier 56 senses the positive voltage output of the integrating differential amplifier 54 and attempts to produce a negative output, but, as previously stated, it cannot produce a negative voltage and, instead, applies a "zero" voltage to the negative sense (S) terminal 60 of the power supply 12, which has no effect on the output voltage of the power supply 12. The non-inverting amplifier 58, however, senses the positive voltage output of the differential amplifier 54 and increases its output voltage by a like amount which is applied to the negative sense (S) terminal 62 of the power supply 14 which, in turn, increases its output voltage a commensurate amount until a state of equilibrium is attained under which, for all practical purposes, the common load 20 is shared equally by the power supplies 12, 14.

Alternatively, if the output voltage of the power supply 14 is slightly higher than that of the power supply 12, the point 52 will become more negative than the point 50 and the integrating differential amplifier 54 will produce a negative output. Here again, the percentage gain of the differential amplifier 54 will become the same as the difference in voltage between the points 50 and 52 expressed as a percentage of the desired output voltage of the power supplies 12, 14. The non-inverting amplifier 58 senses the negative output voltage of the integrating differential amplifier 54 and attempts to produce a negative output, but it cannot do so. Instead, the non-inverting amplifier 58 applies a "zero" voltage to the negative sense (S) terminal 62 of the power supply 14, which has no effect on the output voltage of the power supply 14. The inverting amplifier 56, sensing the negative output voltage of the differential amplifier 54, inverts the output voltage and produces a like positive voltage which is applied to the negative sense (S) terminal 60 of the power supply 12 which, in turn, increases its output voltage a commensurate amount until a state of equilibrium is again achieved under which the common load 20 is share equally by the power supplies 12, 14.

From the foregoing it is apparent that what has been achieved is the equal sharing by two power supplies of the requirements of a common load. This has two beneficial effects, the first being that neither power supply is normally operating near its capacity, i.e., in a current limit condition, thus increasing the operating life of both power supplies and increasing the MTBF (mean time before failure rate). The second beneficial effect is that, if either power supply fails, the other supply assumes the full load current since a truly redundant system of paralleling two power supplies has been achieved. Furthermore, when the two power supplies are equally sharing the load and one of the supplies fails, the other supply is only confronted with a 50% change, rather than a 100% change as in the prior art devices, in its output load requirements, thus minimising any tendency to "overshoot" the required output voltage.

**Claims**

1. A power supply apparatus for supplying electrical power to a common load (20), the apparatus comprising a first power supply means (12) and a second power supply means (14) each electrically connected to the common load (20), detecting means (54) operative to monitor voltages indicative of the outputs of the respective power supply means (12, 14) and to produce therefrom a signal proportional to any difference between the outputs, and signal responsive means (56, 58) responsive to the signal produced by the detecting means (54) to cause the output voltage of only one or the other of the first and second power supply means (12, 14) to change in such a sense that the first and second power supply means (12, 14) are operative to approximately equally supply electrical power to the common load (20), characterised in that the detecting means (54) is operative to monitor voltages proportional to the respective output currents of the respective power supply means (12, 14), whereby the signal is proportional to the difference between the respective output currents of the respective power supply means.

2. Apparatus according to claim 1, wherein the signal responsive means (56, 58) is operative to cause the output voltage of the power supply means having the lower output voltage to increase so as to be approximately equal to the output voltage of the power supply means having the higher output voltage.

3. Apparatus according to claim 1 or claim 2, wherein the signal responsive means comprises an inverting device (56) and a non-inverting device (58), the inverting and non-inverting devices being electrically connected to the detecting means (54) and being separately actuatable depending upon the signal produced by the detecting means.

4. Apparatus according to claim 3, wherein the inverting device (56) and non-inverting device (58) are so designed that simultaneous operation thereof is prevented.

5. Apparatus according to any one of the preceding claims, wherein the detecting means (54) comprises an integrating differential amplifying device.

6. Apparatus according to any one of the preceding claims, wherein each power supply means (12, 14) is electrically connected to the common load (20) by a respective bus (34, 36) and the detecting means (54) is operative to monitor voltages proportional to the respective currents flowing through the respective busses (34, 36).

7. Apparatus according to claim 6, wherein the busses (34, 36) are return busses and each power supply means (12, 14) is also electrically connected to the common load (20) by a respective voltage bus (22, 24) having a respective isolating half-wave rectifier (26, 28) connected therein.

## Patentansprüche

1. Stromversorgungsanlage zum Zuführen elektrischer Leistung zu einer gemeinsamen Last (20), wobei die Anlage ein erstes Stromversorgungsmittel (12) und ein zweites Stromversorgungsmittel (14), die jeweils elektrisch mit der gemeinsamen Last (20) verbunden sind, Detektormittel (54) wirksam um Spannungen zu kontrollieren, die auf die Ausgänge entsprechender Stromversorgungsmittel (12, 14) hinweisen und um daraus ein Signal zu erzeugen, das proportional zu jeglicher Differenz zwischen den Ausgängen ist, und Signalwiedergabemittel (56, 58) entsprechend dem durch das Detektormittel (54) erzeugten Signal aufweist, um zu bewirken, daß die Ausgangsspannung nur eines oder des anderen der ersten und zweiten Stromversorgungsmittel (12, 14) in einem solchen Sinn verändert wird, daß die ersten und zweiten Stromversorgungsmittel (12, 14) wirksam sind, um eine annähernd gleiche elektrische Leistung der gemeinsamen Last (20) zuzuführen, dadurch gekennzeichnet, daß das Detekormittel (54) wirksam ist, um Spannungen proportional zu den entsprechenden Ausgangsströmen der entsprechenden Stromversorgungsmittel (12, 14) zu kontrollieren, wobei das Signal proportional zur Differenz zwishcen den entsprechenden Ausgangssrömen der entsprechenden Stromversorgungsmittel ist.

2. Anlage nach Anspruch 1, in welcher die Signalwiedergabemittel (56, 58) wirksam sind, um eine Erhöhung der Ausgangsspannung desjenigen Stromversorgungsmittel zu bewirken, das die niedrigere Ausgangsspannung besitzt, so daß es annähernd gleich der Ausgangsspannung desjenigen Stromversorgungsmittel ist, das die höhere Ausgangsspannung besitzt.

3. Anlage nach Anspruch 1 oder Anspruch 2, in welcher die Signalwiedergabemittel einen Invertereinrichtung (56) und eine Nicht-Invertereinrichtung (58) aufweisen, wobei die Inverter- und Nich-Invertereinrichtungen elektrisch mit dem Detektormittel (54) verbunden sind und separat betätigbar sind, in Abhängigkeit von dem vom Detektormittel erzeugten Signal.

4. Anlage nach Anspruch 3, in welcher die Invertereinrichtung (56) und die Nicht-Invertereinrichtung (58) derart ausgeführt sind, daß deren gleichzeitiger Betrieb verhindert ist.

5. Anlage nach einem der vorhergehenden Ansprüche, in welcher das Detektormittel (54) eine integrierende Differentialverstärkereinrichtung aufweist.

6. Anlage nach einem der vorhergehenden Ansprüche, in welcher jedes Stromversorgungsmittel (12, 14) elektrisch mit der gemeinsamen Last (20) durch einen entsprechenden Bus (34, 36) verbunden ist und das Detektormittel (54) wirksam ist, um Spannungen proportional zu den entsprechenden Strömen, die durch die entsprechenden Busse (34, 36) fileßen, zu kontrollieren.

7. Anlage nach Anspruch 6, in welcher die Busse (34, 36) Rückleitungsbusse sind und jedes Stromversorgungsmittel (12, 14) auch elektrisch mit der gemeinsamen Last (20) mittels eines entsprechenden Spannungsbusses (22, 24) verbunden ist, der eine damit verbundenen, entsprechenden isolierenden Halbwellengleichrichter (26, 28) hat.

## Revendications

1. Un appareil consistant en une alimentation électrique, destiné à fournir de l'énergie électrique à une change commune (20), l'appareil comprenant un premier dispositif d'alimentation (12) et un second dispositif d'alimentation (14), chacun d'eux étant connecté électriquement à la charge commune (20), des moyens de détection (54) qui contrôlent des tensions représentatives des sorties des dispositifs d'alimentation respectifs (12, 14), et qui produisent à partir d'elles un signal proportionel à toute différence entre les sorties, et des moyens sensibles au signal (56, 58) qui réagissent au signal produit par les moyens de détection (54) en faisant en sorte qu le tension de sortie de l'un ou de l'autre seulement des premier et second dispositifs d'alimentation (12, 14) change dans un sens tel que les premier et second dispositifs d'alimentation (12, 14) fournissent de l'énergie électrique de façon approximativement égale à la charge commune (20), caractérisé en ce que les moyens de détection (54) contrôlent des tensions proportionnelles aux courants de sortie respectifs de dispostifs d'alimentation respectifs (12, 14), grâce à quoi le signal est proportionnel à la différence entr eles courants de sortie respectifs des dispositifs d'alimentation respectifs.

2. Appareil selon la revendication 1, dans lequel les moyens sensibles au signal (56, 58) augmentent la tension de sortie du dispositif d'alimentation ayant la tension de sortie la plus basse, de façon qu'elle devienne approximativement égale à la tension de sortie du dispositif d'alimentation ayant la tension de sortie la plus élevée.

3. Appareil selon la revendication 1 ou la revendication 2, dans lequel les moyens sensibles au signal comprennent un dispositif inverseur (56) et un dispositif non inverseur (58), les dispositifs inverseur et non inverseur étant connectés électriquement aux moyens de détection (54) et pouvant être actionnés séparément en fonction du signal que produisent les moyens de détection.

4. Appareil selon la revendication 3, dans lequel le dispositif inverseur (56) et le dispositif non inverseur (58) son conçus de façon à éviter leur fonctionnement simultané.

5. Appareil selon l'une quelconque des revendications précédentes, dans lequel les moyens de détection (54) comprennent un dispositif amplificateur différentiel intégrateur.

6. Appareil selon l'une quelconque des revendications précédentes, dans lequel chaque dispositif d'aligmentation (12, 14) est connecté électriquement à la charge commune (20) par un ligne bus respective (34, 36), et les moyens de détection (54) contrôlent des tensions proportionelles aux courants respectifs qui circulent dans les lignes bus respectives (34, 36).

7. Appareil selon la revendication 6, dans lequel les lignes bus (34, 36) sont des lignes bus de retour, et chaque dispositif d'alimentation (12, 14) est également connecté électriquement à la charge commune (20) par un ligne bus de tension respective (22, 24) dans laquelle est connecté un redresseur à simple alternance d'isolation respectif (26, 28).